# EUROPEAN PATENT SPECIFICATION

(11) **EP 0 777 341 B1**
(45) Date of publication and mention of the grant of the patent: **13.02.2002**
(21) Application number: 95308619.6
(22) Date of filing: 30.11.1995
(51) Int. Cl.: H04B 7/00

(54) **Adaptive cross-polarization equalizer**
Adaptiver Kreuzpolarisationsentzerrer
Egaliseur adaptif à polarisation croisée

(43) Date of publication of application: 04.06.1997
(73) Proprietor: LORAL AEROSPACE CORPORATION, New York, NY 10016 (US)
(72) Inventor: Andersen, Steven, San Jose, CA 95124 (US)
(74) Representative: Ertl, Nicholas Justin

(56) References cited:
- US-A- 4 090 137
- US-A- 4 220 923
- US-A- 4 575 862
- US-A- 4 757 319

## Description

### BACKGROUND

The present invention relates to adaptive equalizers, and more particularly, to an adaptive cross-polarization equalizer that provides for cancellation of an interfering signal due to low cross-polarization isolation caused by rain on high data rate communication links.

With the increasing utilization of radio frequency communications, the allocatable radio frequency spectrum is rapidly becoming limited. Commercial allocations are encroaching on frequencies which to date have been available for broadband communications. In the future, it will be difficult to provide contiguous RF allocations of several gigahertz for multi-gigahertz communications systems. Therefore, the radio frequency spectrum must be more efficiently managed and utilized. Frequency reuse, using orthogonal polarizations, is one approach to greater efficiency.

Adaptive baseband cancellation architectures have heretofore been developed in order to increase the available radio frequency spectrum utilization, but without complete success. These types of architectures typically use "four rail" adaptive baseband transversal equalizers (ABBE). These architectures require computation of the correlation of the interference on the I and Q signals of each channel with the I and Q signals of the other channel as well as the I and Q signals within each channel. These are very complex architectures and are tied to one modulation and data rate.

The present invention addresses the problem of depolarization in communications systems. Depolarization introduces an interfering signal from the cross-polarized signal into the co-polarized signal. The primary source of interfering signals that cause depolarization is rain. To optimize system performance, the effects of the interfering signals must be minimized. Available field test data and analysis to date indicate that cross-polarization interference due to rain has a fluctuating amplitude and phase shift but that the depolarizing phenomena is nondispersive. The rate of fluctuation is estimated to be less than 1 Hz. Furthermore, due to the dispersive nature of filters in downconverters and demodulators used in adaptive equalizers and to avoid having to match delays between the two receivers, it is desirable to perform cross-polarization cancellation as close to the front end of the microwave chain as possible.

For the purposes of reference, U.S. Patent No. 5,157,697 issued to Anvaru describes a system that suppresses crosstalk between orthogonal channels by subtracting a portion of the signal of one channel from the other as controlled by correlation factors. U.S. Patent No. 4,466,132 issued to Namiki describes a system that eliminates crosstalk between two mutually orthogonal cross-polarized channels. The following references describe systems that are generally similar to the Namiki patent: U.S. Patent No. 4,112,370 issued to Monson; U.S. Patent No. 4,438,530 issued to Steinberger, U.S. Patent No. 4,479,258 issued to Namiki; U.S. Patent No. 4,637,067 issued to Steinberger; and U.S. Patent No. 4,688,235 issued to Tahara et al. U.S. Patent No. 3,735,266 issued to Amitay and U.S. Patent No. 4,090,137 issued to Soma et al describe systems that reduce or minimize crosstalk between cross-polarized channels utilizing pilot signals to indicate the level of crosstalk.

Therefore, it is an objective of the present invention to provide for an adaptive cross-polarization equalizer that provides for cancellation of an interfering signal due to low cross-polarization isolation caused by rain on high data rate communication links.

### SUMMARY OF THE INVENTION

In order to meet the above and other objectives, the present invention comprises an adaptive cross-polarization equalizer that provides for cancellation of an interfering signal due to low cross-polarization isolation caused by rain on high data rate communication links. The adaptive cross-polarization equalizer is employed with a receiver that comprises co-polarization and cross-polarization receiver channels for processing co- and cross-polarized input signals. Each channel comprises a low noise amplifier, a summing device, a downconverter, a demodulator, a least mean-square estimate adaptive baseband equalizer, and a bit sync data detection circuit.

The adaptive cross-polarization equalizer comprises a baseband error signal detector, control logic, and a vector modulator. The baseband error signal detector includes first and second squaring circuits that process error signals generated by the least mean-square estimate adaptive baseband equalizer. Squared outputs of the first and second squaring circuits are summed in a summing device and filtered by a low pass filter. The filtered output of the low pass filter is applied to the control logic.

The control logic comprises an analog to digital converter which processes the output of the low pass filter to produce digitized signal for processing. The output of the analog to digital converter is processed by a logic circuit which generates control signals that control the vector modulator. The output of the logic circuit is demultiplexed by a demultiplexer, and outputs of the demultiplexer are processed by the vector modulator.

The vector modulator comprises first and second multipliers that combine output signals derived from the respective demultiplexer with output signals generated by a zero-degree hybrid. The zero-degree hybrid generates its output signals from the output of the power divider of the cross-polarization receiver channel. Outputs of the respective multipliers are applied to a ninety-degree hybrid which combines the respective output signals therefrom and applies the summed signal to the summing device in the co-polarized receiver channel which sums this signal with the amplified co-polarized input signal.

The present equalizer uses an error signal generated in the adaptive baseband equalizer to determine the magnitude of the interfering signal and then inputs a cancelling signal at the front end of the co-polarized channel until power in the error signal derived from the adaptive baseband equalizer is minimized. The determination of the magnitude of the interfering signal is performed at baseband (after demodulation but prior to data detection) and the cancellation is performed at RF, prior to dispersive microwave elements. The present equalizer enhances the capability for transmitting two unique signals in the same frequency allocation on orthogonal polarizations, and operates even if the modulations and data rates on the two channels are different.

The present equalizer provides a simple and inexpensive cross-polarization interference cancellation system. The equalizer may be used with any digital modulation format and any data rate above 10 Mbps on either channel. The cancellation system can track variations in cross-polarization interference amplitude and phase of 10 Hz, minimum. If the cross-polarization phenomena is dispersive, additional vector modulators may be added at RF in a transversal filter arrangement and controlled using the same architecture.

Control for the vector modulator is generated by minimizing the magnitude of the error signal in the adaptive baseband equalizer. The error signal is the difference between the received baseband data and an idealized estimate of the transmitted data. This signal is made up of data noise due to non-ideal channel, thermal noise, and the interfering signal. Although the present equalizer is designed for receivers that employ an adaptive baseband transversal equalizer, the design is also applicable to receivers that do not have an adaptive baseband transversal equalizer. In this case, the error signal inputs to the equalizer are replaced by I and Q analog inputs and the error signal circuitry provided by the adaptive baseband transversal equalizer is incorporated into the equalizer.

The control logic circuit steps the setting of the vector modulator by one unit and sampling the power in the error signal. If the power is reduced the vector modulator is stepped again in the same direction. If the power is increased the vector modulator is stepped in the opposite direction. The vector modulator has two controls corresponding to an I-Q coordinate system. The controls are dithered one at a time, four consecutive times each.

The present equalizer implementation does not require symmetry between the orthogonal receiver channels. They may differ in both data rate and modulation. If the two cross-polarization phenomena are not symmetrical, the equalizer is not adversely effected. If the cross-polarization phenomena is dispersive, multiple vector modulators may be added in a transversal filter arrangement and controlled in the same manner.

### BRIEF DESCRIPTION OF THE DRAWINGS

The various features and advantages of the present invention may be more readily understood with reference to the following detailed description taken in conjunction with the accompanying drawings, wherein like reference numerals designate like structural elements, and in which:
Fig 1 is a block diagram of an adaptive cross-polarization equalizer in accordance with the principles of the present invention; and
Fig. 2 shows error signal generation circuit that may be employed with the equalizer of Fig. 1.

### DETAILED DESCRIPTION

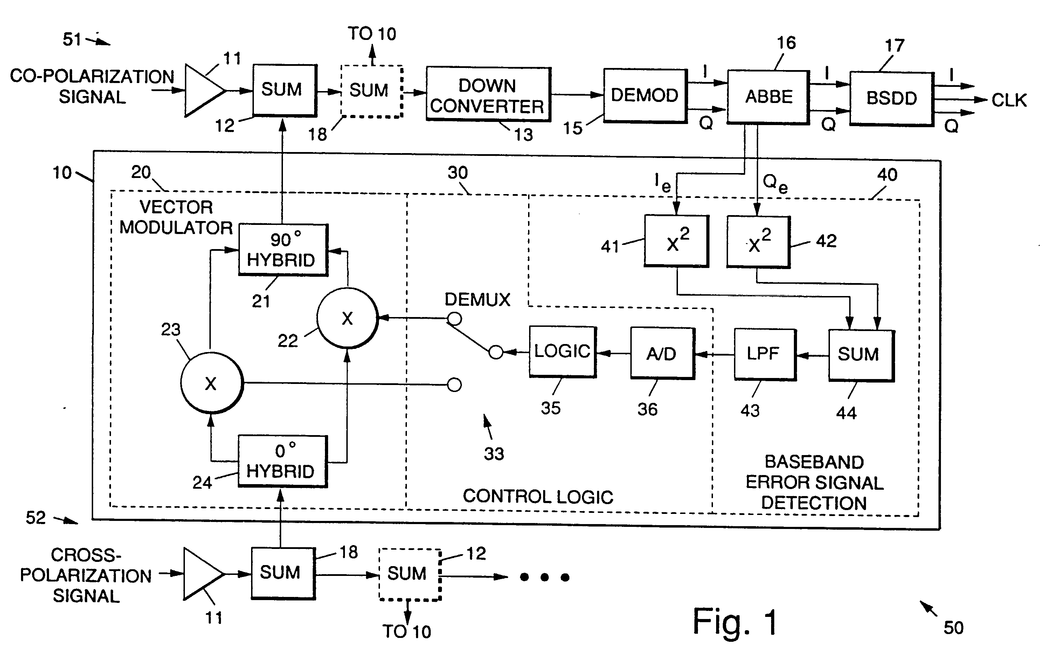

Referring to the drawing figures, Fig 1 is a block diagram of a receiver 50 employing an adaptive cross-polarization equalizer 10 in accordance with the principles of the present invention. The receiver 50 comprises co-polarization and cross-polarization receiver channels 51, 52 for respectively processing co-polarized and cross-polarized signals. The co-polarized signals are amplified in a low noise amplifier 11 and applied to a summing device 12 which sums the amplified co-polarized signals with an output derived from the equalizer 10. The output of the summing device 12 is downconverted in a downconverter 13 and demodulated in a demodulator 15. I and Q output signals from the demodulator 15 are processed by a least mean-square estimate adaptive baseband equalizer 16 whose I and Q output signals are processed by a bit sync data detection circuit (BSDD) 17 to produce baseband output I and Q and clock (CLK) signals from the receiver 50. The cross-polarized signals are also processed by a substantially identical receiver channel 52 (although only a portion there is shown). An output of a power divider 18 of the co-polarization receiver channel 51 is applied as an input signal to the adaptive cross-polarization equalizer 10. The circuitry shown in Fig. 1 illustrates only the adaptive cross polarization equalizer 10. A second equalizer identical 10 is provided to equalize the cross-polarization channel 52.

The adaptive cross-polarization equalizer 10 comprises a baseband error signal detector 40, control logic 30, and a vector modulator 20, respectively encircled by dashed lines in Fig. 1. The baseband error signal detector 40 includes first and second squaring circuits (X²) 41, 42 that process error signals (Iₑ, Qₑ) generated by the least mean-square estimate adaptive baseband equalizer 16. Squared outputs of the first and second squaring circuits 41, 42 are summed in a summing device 44 and filtered by a low pass filter (LPF) 43. The filtered output of the low pass filter 43 is applied to the control logic 30.

The control logic 30 comprises an analog to digital converter (A/D) 36 which processes the output of the low pass filter 43 to produce digitized signal for processing. The output of the analog to digital converter 36 is processed by a logic circuit 35 (LOGIC) which generates control signals that control the vector modulator 20. The output of the logic circuit 35 is demultiplexed by a demultiplexer 33, and outputs of the demultiplexer 33 control the vector modulator 20.

The vector modulator 20 comprises first and second multipliers 22, 23 that combine output signals derived from the respective demultiplexer 33 with output signals generated by a zero-degree hybrid 24. The zero-degree hybrid 24 generates its output signals from the output of the power divider 18 of the cross-polarization receiver channel 52. Outputs of the respective multipliers 22, 23 are applied to a ninety-degree hybrid 21 which combines the respective output signals therefrom and applies the summed signal to the summing device 12 in the co-polarized receiver channel 51 which sums this signal with the amplified co-polarized input signal.

The present equalizer 10 uses the error signal generated by the adaptive baseband equalizer 16 to determine the magnitude of the interfering signal and then inputs a cancelling signal until power in the error signal from the adaptive baseband equalizer 16 is minimized. In the present equalizer 10, the determination of the magnitude of the interfering signal is performed at baseband (after demodulation but prior to data detection) and cancellation is performed at RF, prior to dispersive microwave elements. The equalizer 10 enhances the capability for transmitting two unique signals in the same frequency allocation on orthogonal polarizations. The equalizer 10 operates even if the modulations and data rates on the two channels 51, 52 are different.

The present equalizer 10 provides a simple and inexpensive cross-polarization interference cancellation system. The equalizer 10 may be used with any digital modulation format and any data rate above ten Mbps on either channel. The equalizer 10 tracks variations in cross-polarization interference amplitude and phase of 10 Hz, minimum. If the cross-polarization phenomena is dispersive, additional taps may be added at RF and controlled using the same architecture.

The present equalizer 10 provides a solution to the problem of cancelling an interfering signal due to low cross-polarization isolation caused by rain, for example, on high data rate communication links. In the receiver 50, both transmitted polarizations are received and amplified. A signal from the cross channel is supplied to the other receiver channel 51, 52. The RF vector modulator 20 is used to control the phase and amplitude of the cross-polarized signal prior to summation with the co-polarized signal. When the amplitude and the phase of the vector modulator 20 are correctly set, the interfering signal is cancelled.

Control for the vector modulator 20 is generated by minimizing the magnitude of the error signal in the least mean-square estimate adaptive baseband equalizer 16. The error signal is the difference between the received baseband data and an estimate of the ideal transmitted data. This signal is made up of data noise due to non-ideal channel, thermal noise, and the interfering signal. The ratio of the interfering signal power to noise power determines the effectiveness of the equalizer 10.

The control logic circuit 35 that sets the phase and amplitude for the vector modulator 20 to minimize the magnitude of the error signal does so by stepping the setting of the vector modulator 20 by one unit and sampling the power in the error signal. If the power is reduced the vector modulator 20 is stepped again in the same direction. If the power is increased the vector modulator 20 is stepped in the opposite direction. The vector modulator 20 has two controls corresponding to an I-Q coordinate system. The controls are dithered one at a time, four consecutive times each using the demultiplexer 33.

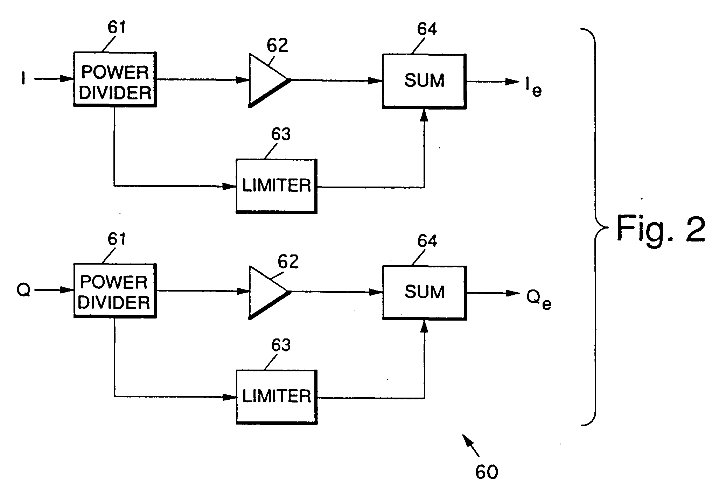

Although the present equalizer 10 is designed for receivers 50 that employ an adaptive baseband transversal equalizer 16, the design is also applicable to receivers 50 that do not have an adaptive baseband transversal equalizer 16. In this case, error signal inputs to the equalizer 10 are replaced by I and Q analog inputs and the error signal circuitry normally provided by the adaptive baseband transversal equalizer is incorporated into the present equalizer 10. An error signal generation circuit 60 that implements this is shown in Fig. 2. The circuit 60 is comprised of a power divider 61 and inverter 62, a limiter 63, and a summing device 64 connected as shown that respectively process the I and Q signals to generate the I and Q error signals (Iₑ, Qₑ). The circuit 60 of Fig. should be well understood by those skilled in the art.

The present equalizer 10 does not require symmetry between the orthogonal channels 51, 52. They may differ in both data rate and modulation. If the two cross polarization phenomena are not symmetrical, the equalizer 10 is not adversely effected. If the cross-polarization phenomena is dispersive, multiple vector modulators 20 may be added in a transversal filter arrangement and controlled in the same manner as described above. The present equalizer 10 has been built and tested in a laboratory against a cross-polarization model and works very well.

Thus there has been described a new and improved adaptive cross-polarization equalizer that provides for cancellation of an interfering signal due to low cross-polarization isolation caused by rain on high data rate communication links. It is to be understood that the above-described embodiment is merely illustrative of some of the many specific embodiments which represent applications of the principles of the present invention. Clearly, numerous and other arrangements can be readily devised by those skilled in the art without departing from the scope of the invention.

## Claims

1. An adaptive cross-polarization equalizer (10) for use with a receiver (50) that provides for cancellation of an interfering signal due to low cross-polarization isolation, wherein the receiver (50) comprises co-polarization and cross-polarization receiver channels (51,52) for respectively processing co-polarized and cross-polarized input signals, and wherein each channel (51,52) comprises a low noise amplifier (11) for amplifying the input signals, a power divider (18), a summing device (12), a downconverter (13), a demodulator (15), an adaptive baseband equalizer (16), and a bit syne data detection circuit (17) for providing baseband output signals, and wherein said equalizer (10) comprises a baseband error signal detector (40) comprising first and second squaring circuits (41,42) for squaring error signals (Iₑ,Q_{c}) generated by the adaptive baseband equalizer (16), a summing device 44 coupled to the squaring circuits for summing the squared error signals, and a low pass filter (43), coupled to the summing device for filtering the squared error signals; control logic 30 comprising an analog to digital converter (36) for processing the filtered squared error signals from the low pass filter (43) to produce digitized signals for processing, a logic circuit (35) coupled to the analog to digital converter for generating control signals, and a demultiplexer (33) coupled to the logic circuit, and a vector modulator (20) comprising a zero-degree hybrid (24), first and second multipliers (22,23) coupled to the zero-degree hybrid and to the demultiplexer (33) that combine output signals derived from the demultiplexer with output signals generated by the zero-degree hybrid, and a ninety-degree hybrid (21) coupled to outputs of the respective multipliers (22, 23) for combining the output signals from the multipliers and applying it to the first summing device (12).

2. The equalizer (10) of Claim 1 which processes the error signal generated by the adaptive baseband equalizer (16) to determine the magnitude of an interfering signal and then inputs a cancelling signal until power in the error signal is minimized.

3. The equalizer (10) of Claim 1, wherein the vector modulator (20) controls the phase and amplitude of the cross-polarized signal prior to summation with the co-polarized signal, and wherein the interfering signal is cancelled when the amplitude and the phase of the vector modulator (20) are correctly set.

4. The equalizer (10) of Claim 1, wherein the control circuit (35) generates control signals for the vector modulator (20) by minimizing the magnitude of the error signal in the adaptive baseband equalizer (16).

5. The equalizer (10) of Claim 4, wherein the error signal is the difference between received baseband data and an estimate of ideal transmitted data.

6. The equalizer (10) of Claim 1, wherein the control logic circuit (35) sets the phase and amplitude for the vector modulator (20) to minimize the magnitude of the error signal by stepping the setting of the vector modulator (20) by one unit and sampling the power in the error signal, wherein if the power is reduced the vector modulator (20) is stepped again in the same direction, and wherein if the power is increased the vector modulator (20) is stepped in the opposite direction, and wherein the control signals are dithered one at a time, four consecutive times each.

## Patentansprüche

1. Adaptiver Kreuzpolarisationsentzerrer (10) zur Verwendung mit einem Empfänger (50), der die Löschung eines Störsignals bedingt durch geringe Kreuzpolarisationsisolierung erreicht, worin der Empfänger (50) Kopolarisations- und Kreuzpolarisationsempfangskanäle (51, 52) aufweist, um entsprechend kopolarisierte und kreuzpolarisierte Eingabesignale zu bearbeiten, und worin jeder Kanal (51, 52) einen rauscharmen Verstärker (11) zum Verstärken der Eingabesignale umfasst, einen Leistungsverteiler (18), eine Summiervorrichtung (12), einen Abwärtswandler (13), einen Demodulator (15), einen adaptiven Basisbandentzerrer (16) und eine Bitsynchronisierdatenauswerteschaltung (17) zur Erstellung von Basisbandausgabesignalen, und worin der Entzerrer (10) einen Basisbandfehlersignaldetektor (40) umfasst, der erste und zweite Rechteckformer (41, 42) umfasst zum Quadrieren von Fehlersignalen (I_{c}, Q_{c}), die durch den adaptiven Basisbandentzerrer (16) erzeugt sind, eine Summiervorrichtung (44) gekoppelt mit den Rechteckformern zum Summieren der umgeformten Fehlersignale und einen Tiefpassfilter (43) gekoppelt mit der Summiervorrichtung zum Filtern der umgeformten Fehlersignale, Steuerungslogik (30) umfassend einen Analog-Digital-Wandler (36) zum verarbeiten der gefilterten umgeformten Fehlersignale aus dem Tiefpassfilter (43), um digitalisierte Signale zur Verarbeitung zu bilden, eine Logikschaltung (35) gekoppelt mit dem Analog-Digital-Wandler zum Erzeugen von Steuerungssignalen und eine Demultiplexer (33) gekoppelt mit der Logikschaltung und einen Vektormodulator (20), der einen Null-Grad- Hybrid (24) umfasst, erste und zweite Multiplier (22, 23) gekoppelt mit dem Null-Grad-Hybrid und dem Demultiplexer (33), die vom Demultiplexer gewonnene Ausgabesignale mit den vom Null-Grad-Hybrid erzeugten Ausgabesignalen kombinieren, und einen Neunzig-Grad-Hybrid (21) gekoppelt mit Ausgaben der entsprechenden Multiplier (22, 23) zum Kombinieren der Ausgabesignale von den Multipliern und zum Aufbringen auf die erste Summiervorrichtung (12).

2. Entzerrer (10) nach Anspruch 1, der das vom adaptiven Basisbandentzerrer (16) erzeugte Fehlersignal verarbeitet, um die Grösse eines Störsignals zu bestimmen und dann ein Löschungssignal eingibt, bis die Stärke im Fehlersignal minimiert ist.

3. Entzerrer (10) nach Anspruch 1, worin der Vektormodulator (20) die Phase und die Amplitude des Kreuzpolarisationssignals vor Summierung mit dem Kopolarisationssignal steuert, und worin das Störsignal gelöscht wird, wenn die Amplitude und die Phase des Vektormodulators (20) korrekt eingestellt sind.

4. Entzerrer (10) nach Anspruch 1, worin die Steuerungsschaltung (35) Steuersignale für den Vektormodulator (20) durch Minimieren der Grösse des Fehlersignals im adaptiven Basisbandentzerrer (16) erzeugt.

5. Entzerrer (10) nach Anspruch 4, worin das Fehlersignal die Differenz zwischen empfangenen Basisbanddaten und einer Schätzung idealer Übertragungsdaten ist.

6. Entzerrer (10) nach Anspruch 1, worin die Steuerungslogikschaltung (35) die Phase und Amplitude für den Vektormodulator (20) einstellt, um die Grösse des Fehlersignals zu minimieren, durch schrittweises Verstellen der Einstellung des Vektormodulators (20) um eine Einheit und Messen der Stärke des Fehlersignals, worin, wenn die Stärke reduziert ist, der Vektormodulator (20) wieder schrittweise in dieselbe Richtung verstellt wird, und worin, wenn die Stärke erhöht ist, der Vektormodulator (20) schrittweise in die entgegengesetzte Richtung verstellt wird, und worin die Steuersignale einzeln gegeben werden, jedes viermal nacheinander.

## Revendications

1. Egaliseur de polarisation circulaire croisée adaptatif (10) utilisant avec un récepteur (50) qui assure l'annulation d'un signal d'interférence en raison du faible isolement de polarisation circulaire croisée, dans lequel le récepteur (50) comprend des canaux récepteurs de co-polarisation et de polarisation circulaire croisée (51, 52) pour traiter respectivement les signaux d'entrée co-polarisés et à polarisation circulaire croisée, et dans lequel chaque canal (51, 52) comprend un amplificateur à faible bruit (11) pour amplifier les signaux d'entrée, un diviseur d'énergie (18), un dispositif de sommation (12), un circuit abaisseur de fréquence (13), un démodulateur (15), un égaliseur en bandes de base adaptatif (16), un circuit de détection de données et de synchronisation de bit (17) pour délivrer des signaux de sortie en bandes de base, et dans lequel ledit égaliseur (10) comprend un détecteur de signal d'erreur en bandes de base (40) comprenant des premier et second circuits d'élévation au carré (41, 42) pour élever au carré les signaux d'erreur (Ic,Qc) générés par l'égaliseur en bandes de base adaptatif (16), un dispositif de sommation (44) couplé au circuit d'élévation au carré pour sommer des signaux d'erreur élevés au carré et un filtre passe-bas (43), couplé au dispositif de sommation pour filtrer les signaux d'erreur élevés au carré ; une logique de commande (30) comprenant un convertisseur analogique/numérique (36) pour traiter les signaux d'erreur élevés au carré filtrés provenant du filtre passe-bas (43) pour produire des signaux numérisés à des fins de traitement, un circuit logique (35) couplé au convertisseur analogique/numérique pour générer des signaux de commande, et un démultiplexeur (33) couplé au circuit logique, et un modulateur de vecteur (20) comprenant un circuit hybride de zéro degré (24), des premier et second multiplicateurs (22, 23) couplés au circuit hybride de zéro degré et au démultiplexeur (33) qui combine les signaux de sortie obtenus depuis le démultiplexeur avec les signaux de sortie générés par le circuit hybride zéro degré, et un circuit hybride quatre-vingt-dix degrés (21) couplé aux sorties des multiplicateurs respectifs (22, 23) pour combiner les signaux de sortie provenant des multiplicateurs et les appliquer au premier dispositif de sommation (12).

2. Egalisateur (10) selon la revendication 1, qui traite le signal d'erreur généré par l'égaliseur en bandes de base adaptatif (16) pour déterminer l'amplitude d'un signal d'interférence et entre ensuite un signal d'annulation jusqu'à ce que l'énergie dans le signal d'erreur soit minimisée.

3. Egaliseur (10) selon la revendication 1, dans lequel le modulateur de vecteur (20) commande la phase et l'amplitude du signal de polarisation circulaire croisée avant la sommation avec le signal co-polarisé, et dans lequel le signal d'interférence est annulé lorsque l'amplitude et la phase du modulateur de vecteur (20) sont correctement établies.

4. Egaliseur (10) selon la revendication 1, dans lequel le circuit de commande (35) génère des signaux de commande pour le modulateur de vecteur (20) en minimisant l'amplitude du signal d'erreur dans l'égaliseur en bandes de base adaptatif (16).

5. Egaliseur (10) selon la revendication 4, dans lequel le signal d'erreur est la différence entre les données en bandes de base reçues et une estimée des données transmises idéales.

6. Egaliseur (10) selon la revendication 1, dans lequel le circuit logique de commande (35) établit la phase et l'amplitude pour le modulateur de vecteur (20) pour minimiser l'amplitude du signal d'erreur en déplaçant pas à pas le réglage de modulateur de vecteur (20) par une unité en échantillonnant l'énergie dans le signal d'erreur, dans lequel si l'énergie est réduite, le modulateur de vecteur (20) est de nouveau déplacé pas à pas dans la même direction, et dans lequel si l'énergie est accrue, le modulateur de vecteur (20) est déplacé pas à pas dans la direction opposée, et dans lequel les signaux de commande sont activés un à la fois, quatre fois consécutives chacun.
